# EUROPÄISCHE PATENTSCHRIFT

(11) **EP 2 794 760 B1**
(45) Veröffentlichungstag und Bekanntmachung des Hinweises auf die Patenterteilung: **23.03.2016**
(21) Anmeldenummer: 12809241.8
(22) Anmeldetag: 17.12.2012
(51) Int. Cl.: C08L 83/04, B01D 19/04, C08K 3/36

(54) **VERFAHREN ZUR HERSTELLUNG VON ENTSCHÄUMERZUSAMMENSETZUNGEN**
METHOD FOR PRODUCING ANTIFOAM COMPOSITIONS
PROCÉDÉ DE FABRICATION DE COMPOSITIONS ANTI-MOUSSE

(30) Priorität: 21.12.2011 DE 102011089374
(43) Veröffentlichungstag der Anmeldung: 29.10.2014
(73) Patentinhaber: Wacker Chemie AG, 81737 München (DE)
(72) Erfinder: BURGER, Willibald, 84489 Burghausen (DE); RAUTSCHEK, Holger, 01612 Nünchritz (DE); WIMMER, Josef, 84489 Burghausen (DE)
(74) Vertreter: Deffner-Lehner, Maria
(86) Internationale Anmeldenummer: PCT/EP2012/075715
(87) Internationale Veröffentlichungsnummer: WO 2013/092462

(56) Entgegenhaltungen:
- EP-A1- 1 076 073
- EP-A2- 0 726 086

## Beschreibung

Die Erfindung betrifft Verfahren zur Herstellung von Zusammensetzungen, enthaltend Organosiliciumverbindungen und hydrophobe Kieselsäuren und deren Verwendung als Entschäumer.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensiven Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumer auf Siloxanbasis besonders bewährt. Entschäumer auf Basis von Siloxanen werden beispielsweise nach US 3,383,327 A durch Erhitzen von hydrophiler Kieselsäure in Polydimethylsiloxanen hergestellt. Durch Anwendung von basischen Katalysatoren kann die Wirksamkeit derartiger Entschäumer verbessert werden, wie in US 3,560,401 A offenbart. Eine Alternative ist die Verteilung von hydrophobierter Kieselsäure in einem Polydimethylsiloxan, z.B. entsprechend DE 29 25 722 A1.

Jedoch ist die Wirksamkeit der erhaltenen Entschäumer meist verbesserungswürdig. So beschreibt US-A 4 145 308 beispielsweise eine Entschäumerzubereitung, die neben einem Polydiorganosiloxan und Kieselsäure noch ein Copolymeres aus (CH₃)₃SiO_{1/2}- und SiO₂-Bausteinen enthält.

Copolymere aus (CH₃)₃SiO_{1/2}- und SiO₂-Bausteinen sollen auch in Kombination mit Siloxanen, die endständige Langalkylgruppen tragen, vorteilhaft sein, wie in EP-A 301 531 (korrespondierende US 4,919,843 A) beschrieben. In diesen Formulierungen werden auch Mischungen aus pyrogenen und gefällten Kieselsäuren eingesetzt.

In EP-B 726 086 wird eine verbesserte Wirksamkeit der Entschäumerformulierung dadurch erreicht, dass eine Mischung aus vorbehandelter hydrophobierter Kieselsäure und in situ hydrophobierter Kieselsäure eingesetzt wird. Dabei wird erst die hydrophile Kieselsäure mit dem Polysiloxan vermischt. Dann erfolgt die in situ Hydrophobierung bei erhöhten Temperaturen und nach dem Abkühlen wird die vorbehandelte hydrophobierte Kieselsäure zugegeben.

In EP 1 076 073 A1 sind hydrophobe Kieselsäure enthaltende Entschäumerzusammensetzungen beschrieben, bei dem als Antischaummittel eine Mischung enthaltend Organopolysiloxane und 1 bis 15 Gew.-% einer in-situ hydrophobierten Kieselsäure mit einer BET-Oberfläche von größer 50 m²/g und/oder einer vorbehandelten, hydrophoben Kieselsäure mit einer BET-Oberfläche von größer als 50 m²/g eingesetzt wird.

Die bekannten Entschäumerformulierungen weisen jedoch in stark schäumenden tensidreichen Systemen wie zum Beispiel in Waschmitteln oder der bei der Papierherstellung anfallenden Schwarzlauge nicht immer eine ausreichend lang anhaltende Wirksamkeit und Verträglichkeit auf.

Es bestand die Aufgabe Entschäumerformulierungen bereitzustellen, bei denen die oben genannten Nachteile vermieden werden.

Gegenstand der Erfindung ist ein Verfahren zur Herstellung von hydrophobe Kieselsäure enthaltenden Zusammensetzungen dadurch gekennzeichnet, dass
(1) eine Mischung enthaltend
   (A) Organopolysiloxane mit einer Viskosität von 10 - 10 000 000 mm²/s bei 25°C und 1013 hPa aus Einheiten der Formel

      Rₐ(R¹O)_{b}SiO_{(4-a-b)/2} (I),

      worin
      - R: gleich oder verschieden sein kann und einen einwertigen, gegebenenfalls substituierten Kohlenwasserstoffrest mit 1-30 Kohlenstoffatomen, vorzugsweise 1-18 Kohlenstoffatomen, oder ein Wasserstoffatom bedeutet,
      - R¹: gleich oder verschieden sein kann und ein Wasserstoffatom oder einen einwertigen Kohlenwasserstoffrest mit 1-4 Kohlenstoffatomen bedeutet,
      - a: 0, 1, 2 oder 3 ist und
      - b: 0, 1, 2 oder 3 ist,
      mit der Maßgabe, dass die Summe a+b≤3 ist und bei mehr als 50 % aller Einheiten der Formel (I) im Organopolysiloxan (A) die Summe a+b gleich 2 ist,
      wobei die Viskosität der Organopolysiloxane (A) durch die Anzahl der Einheiten der Formel (I) bestimmt wird,
   (B) hydrophile Kieselsäuren mit einer BET-Oberfläche von 20 - 500 m²/g, wobei die hydrophilen Kieselsäuren in Mengen von 0,1 bis 20 Gew.-teilen, bezogen auf 100 Gew.-teile Organopolysiloxane (A), eingesetzt werden,
   (C) hydrophobe Kieselsäuren mit einer BET-Oberfläche von 50 - 500 m²/g, wobei die hydrophoben Kieselsäuren in Mengen von 0,1 bis 20 Gew.-teilen, bezogen auf 100 Gew.-teile Organopolysiloxane (A), eingesetzt werden, gegebenenfalls
   (D) Organopolysiloxanharze aus Einheiten der Formel

      R²ₑ(R³O)_{f}SiO_{(4-e-f)/2} (II),
   worin R² die Bedeutung von R und R³ Bedeutung von R¹ hat,
   e 0, 1, 2 oder 3 ist und
   f 0, 1, 2 oder 3 ist,
   mit der Maßgabe, dass die Summe e+f≤3 ist und in weniger als 50 % aller Einheiten der Formel (II) im Organopolysiloxanharz die Summe e+f gleich 2 ist,
   und gegebenenfalls
   (E) wasserunlösliche organische Verbindungen,
   bei Temperaturen von 50-250°C erhitzt wird, bis die Viskosität einen Wert von weniger als 50 %, vorzugsweise weniger als 40 %, insbesondere weniger als 30 %, der gemessenen Viskosität aufweist, die die Mischung vor dem Erhitzen hatte, wobei die Viskosität mit einem Kegel-Platte Viskosimeter bei einer Temperatur von 25°C und einem Schergefälle von 1/s gemessen wird, und
(2) anschließend an die in (1) durchgeführte in-situ-Hydrophobierung der hydrophilen Kieselsäuren in Gegenwart der hydrophoben Kieselsäuren gegebenenfalls
   (F) Organopolysiloxane, die verschieden von (A) sind, eingemischt werden.

Da die eingesetzte hydrophobe Kieselsäure (C) schon vorbehandelt ist und keiner weiteren Hydrophobierung bedarf und auch keinen Beitrag zur Hydrophobierung der hydrophilen Kieselsäure leisten kann, war es nicht zu erwarten, dass die Gegenwart der vorbehandelten hydrophoben Kieselsäure einen Einfluss auf die Eigenschaften des Endproduktes hat. Umso überraschender war, dass die nach dem erfindungsgemäßen Verfahren hergestellten Zusammensetzungen, bei denen die in situ Hydrophobierung der hydrophilen Kieselsäure (B) in Gegenwart der vorbehandelten Kieselsäure (C) erfolgt, eine wesentlich bessere Wirksamkeit als Entschäumer aufweisen.

Die Reste R und R² können Alkylreste, Cycloalkylreste, Alkenylreste, Arylreste oder Aralkylreste sein. Beispiele für Reste R und R² sind der Methylrest, der Ethylrest, der Octylrest, der 2-Propenylphenylrest und der Phenylrest. Beispiele für substituierte Reste R und R² sind halogenierte Kohlenwasserstoffreste, wie der 3,3,3-Trifluorpropylrest oder polar substituierte Reste wie der Aminopropylrest, der Aminopropylaminoethylrest, der Methacrylpropylrest und der Glycidoxypropylrest. Besonders bevorzugt als Rest R und R² ist der Methylrest.

Beispiele für Reste R¹ und R³ sind das Wasserstoffatom, der Methylrest und der Ethylrest.
Besonders bevorzugt als Rest R¹ ist das Wasserstoffatom.

Vorzugsweise enthalten die Organopolysiloxane (A) durchschnittlich 30 - 500 Gew.-ppm Si-gebundene OH-Gruppen, d. h. in 0,013 bis 0,22 mol % der Einheiten der Formel (I) ist b = 1 bzw. a = 1 und R¹ = H und in 99,78 bis 99,987 mol% der Einheiten der Formel (I) ist b = 0 bzw. a = 2.

Das Organopolysiloxan (A) hat eine Viskosität (gemessen bei 25°C und 1013 hPa) von vorzugsweise von 50 - 200 000 mm²/s, bevorzugt 500 - 20 000 mm²/s.

Bevorzugt werden als Organopolysiloxane (A) lineare Organopolysiloxane der allgemeinen Formel

R_{3-g}(R¹O)_{g}Si-[OSiR₂]ₙ-OSi(OR¹)_{g}R_{3-g} (III),

worin R und R¹ die oben dafür angegebene Bedeutung haben,
g 0 oder 1 ist und
n eine ganze Zahl ist und einen solchen Wert hat, dass die Viskosität der Organopolysiloxane (A) 10 - 10 000 000 mm²/s bei 25°C und 1013 hPa, beträgt,
mit der Maßgabe, dass die Organopolysiloxane der Formel (III) durchschnittlich einen Gehalt an Si-gebundenen OH-Gruppen von 30-500 Gew.-ppm aufweisen,
eingesetzt.

Vorzugsweise wird als hydrophile Kieselsäure (B) solche mit einer BET-Oberfläche von 100-400 m²/g eingesetzt.

Beispiele für hydrophile Kieselsäuren (B) sind hydrophile pyrogene Kieselsäuren und hydrophile gefällte Kieselsäuren. Beispiele für im Handel erhältliche hydrophile pyrogene Kieselsäuren sind HDK^{®} N 20, HDK^{®} S13 und HDK^{®} T30 (käuflich erhältlich bei der Wacker Chemie AG, München), AEROSIL^{®} 200 (käuflich erhältlich bei der Fa. Evonik Degussa GmbH, Frankfurt am Main) und Cab-O-Sil^{®} LM 150 (käuflich erhältlich bei Cabot GmbH, Rheinfelden).
Beispiele für im Handel erhältliche hydrophile gefällte Kieselsäuren sind Sipernat^{®} 383 DS und Sipernat^{®} 160 PQ (käuflich erhältlich bei der Fa. Evonik Degussa GmbH, Frankfurt am Main) sowie Syloid^{®} 244 FP, (käuflich erhältlich bei Grace GmbH & Co. KG, Worms).

Die erfindungsgemäßen Zusammensetzungen enthalten hydrophile Kieselsäuren (B) in Mengen von bevorzugt 1 bis 10 Gewichtsteilen, jeweils bezogen auf 100 Gewichtsteile Komponente (A).

Die vorbehandelte hydrophobe Kieselsäure (C) hat eine BET-Oberfläche von vorzugsweise von 50-200 m²/g. Es können hydrophobe pyrogene Kieselsäuren oder auch andere vorbehandelte hydrophobe Kieselsäuren wie hydrophobe gefällte Kieselsäuren eingesetzt werden. Derartig vorbehandelte hydrophobe Kieselsäuren sind dem Fachmann bekannt, handelsüblich und beispielsweise in EP 726 086 A2, EP 967 252 A1, EP 1 304 361 B1 und EP 1 561 728 A2 beschrieben.

Beispiele für im Handel erhältliche hydrophobe pyrogene Kieselsäuren sind HDK^{®} H2000 und HDK^{®} H15 (käuflich erhältlich bei der Wacker Chemie AG, München) sowie AEROSIL^{®} 972 und AEROSIL^{®} 805 (käuflich erhältlich bei der Fa. Evonik Degussa GmbH, Frankfurt am Main).
Beispiele für im Handel erhältliche hydrophobe gefällte Kieselsäuren sind Sipernat^{®} D10 und Sipernat^{®} D17 (käuflich erhältlich bei der Fa. Evonik Degussa GmbH, Frankfurt am Main). Die als Komponente (C) eingesetzte hydrophobe Kieselsäure hat einen Kohlenstoffgehalt von bevorzugt 0,1 bis 5,0 Gew.-%, insbesondere von 0,5 bis 3 Gew.-%.

Die als Komponente (C) eingesetzte hydrophobe Kieselsäure zeigt vorzugsweise eine Methanolbenetzbarkeit von größer als 30 Gew.-%, d.h. Wasser kann diese hydrophobe Kieselsäure nur dann benetzen, wenn es mindestens 30 Gew.-% Methanol enthält. Bevorzugt zeigt die hydrophobe Kieselsäure (C) eine Methanolbenetzbarkeit von größer als 50 Gew.-%, insbesondere 50 bis 70 Gew.-%.
Der Methanoltitrationstest zur Bestimmung der Hydrophobie der Kieselsäure ist in DE-A 2107082, Seite 3, 2. Absatz (korrepondierende US 3,963,627, Spalte 1, Zeilen 52-63) und EP 1 304 361 B1, Seite 11, Zeile 15 ff. beschrieben.

Die erfindungsgemäßen Zusammensetzungen enthalten hydrophobe Kieselsäuren (C) in Mengen von bevorzugt 1 bis 10 Gewichtsteilen, jeweils bezogen auf 100 Gewichtsteile Komponente (A).

Das Gewichtsverhältnis von Komponente (B) zu Komponente (C) ist vorzugsweise 95:5 bis 5:95, bevorzugt 80:20 bis 20:80, und besonders bevorzugt 70:30 bis 30:70.

Bei der gegebenenfalls eingesetzten Komponente (D) handelt es sich um Siliconharze aus Einheiten der Formel (II), bei denen vorzugsweise in weniger als 5% der Einheiten im Harz die Summe a+b gleich 2 ist.

Besonders bevorzugt handelt es sich bei Komponente (D) um Organopolysiloxanharze, die im Wesentlichen aus R²₃SiO_{1/2} (M) - und SiO_{4/2} (Q) -Einheiten bestehen, wobei R² die oben dafür angegebene Bedeutung hat; diese Harze werden auch als MQ-Harze bezeichnet. Das molare Verhältnis von M- zu Q-Einheiten liegt vorzugsweise im Bereich von 0,5 bis 2,0, besonders bevorzugt im Bereich von 0,6 bis 1,0. Diese Siliconharze können außerdem bis zu 10 Gew.-% freie Si-gebundene Hydroxy- oder Alkoxygruppen enthalten.

Vorzugsweise haben diese Organopolysiloxanharze (D) bei 25°C eine Viskosität größer 1 000 mPas oder sind Feststoffe. Das mit Gelpermeationschromatografie bestimmte gewichtsmittlere Molekulargewicht M_{w} (bezogen auf einen Polystyrolstandard) dieser Harze beträgt vorzugsweise 200 bis 200 000 g/mol, bevorzugt 1 000 bis 20 000 g/mol.

Komponente (D) sind handelsübliche Produkte bzw. können nach in der Siliciumchemie gängigen Verfahren, z. B. entsprechend "Parsonage, J. R.; Kendrick, D. A. (Science of Materials and Polymers Group, University of Greenwich, London, UK SE18 6PF) Spec. Publ. - R. Soc. Chem. 166, 98-106, 1995", US-A 2,676,182 oder EP-A 927 733 hergestellt werden.

Die erfindungsgemäßen Zusammensetzungen enthalten Organopolysiloxanharze (D) in Mengen von vorzugsweise 0,5 bis 30 Gewichtsteilen, bevorzugt 0,1 bis 10 Gewichtsteilen, jeweils bezogen auf 100 Gewichtsteile Komponente (A).

Außer den Komponenten (A) bis (D) können die erfindungsgemäßen Zusammensetzungen weitere Stoffe enthalten, wie sie auch bisher in Entschäumerformulierungen verwendet worden sind.

Beispiele für weitere Stoffe sind wasserunlösliche organische Verbindungen (E). Unter dem Begriff "wasserunlöslich" soll im Sinne der vorliegenden Erfindung eine Löslichkeit in Wasser bei 25°C und einem Druck von 1013 hPa von maximal 3 Gewichtsprozent verstanden werden.
Vorzugsweise handelt es sich bei den wasserunlösliche organische Verbindungen um solche mit einem Siedepunkt größer als 100°C bei dem Druck der umgebenden Atmosphäre, also bei 900 bis 1100 hPa, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, Fettsäureestern, wie z. B. Octylstearat, Dodecylpalmitat, Fettalkoholen, Ethern niedermolekularer Alkohole, Phthalaten, Estern der Phosphorsäure und Wachsen.

Die erfindungsgemäßen Zusammensetzungen enthalten wasserunlösliche organische Verbindung (E) in Mengen von bevorzugt 0 bis 1000 Gewichtsteilen, besonders bevorzugt 0 bis 100 Gewichtsteilen, jeweils bezogen auf 100 Gewichtsteile des Gesamtgewichts der Komponenten (A) bis (E).

Das Herstellen der erfindungsgemäßen Zusammensetzungen im Verfahrenschritt (1) kann nach bekannten Verfahren durch Mischen aller Komponenten (A) bis (D), ggf. (E), erfolgen, z.B. unter Anwendung von hohen Scherkräften in Kolloidmühlen, Dissolvern oder Rotor-Stator-Homogenisatoren. Dabei kann der Mischvorgang bei reduziertem Druck erfolgen, um das Einmischen von Luft, welche z. B. in hochdispersen Füllstoffen, wie den Kieselsäuren (B) und (C), enthalten ist, zu verhindern. Vorzugsweise erfolgt nach dem Mischen aller Komponenten das Erhitzen der Mischung und damit die in situ Hydrophobierung der hydrophilen Kieselsäure (B) in Gegenwart der hydrophoben Kieselsäure (C).

Das Mischen und Erhitzen kann aber auch ganz oder teilweise simultan erfolgen, so dass beispielsweise das Erhitzen schon während des Mischens der Komponenten erfolgt.

Die Herstellung der erfindungsgemäßen Zusammensetzungen erfolgt z.B. in Knetern, Dissolvern und Kolloidmühlen.

Das Erhitzen im Verfahrensschritt (1) wird bei Temperaturen von vorzugsweise 100 bis 200°C und beim Druck der umgebenden Atmosphäre, also zwischen 900 und 1100 hPa, durchgeführt.

Bei der Herstellung der erfindungsgemäßen Zusammensetzung im Verfahrensschritt (1) wird eine Mischenergie von vorzugsweise mehr als 3,0 kJ/kg, besonders bevorzugt mehr als 8 kJ/kg, insbesondere 10 bis 150 kJ/kg, eingetragen.

Die in situ Hydrophobierung der hydrophilen Kieselsäure (B) im Verfahrensschritt (1) erfolgt dabei vorzugsweise durch mehrstündiges Erhitzen der Mischung im Verfahrenschritt (1). Das Erhitzen erfolgt vorzugsweise für 1 bis 10 Stunden, bevorzugt 2 bis 5 Stunden.

Die in situ Hydrophobierung kann dabei unter Zusatz von die in-situ-Hydrophobierung fördernde Katalysatoren (G) vorzugsweise Alkalimetallhydroxide, erfolgen. Bevorzugte Beispiele für Alkalimetallhydroxide sind Natriumhydroxid und Kaliumhydroxid, wobei Kaliumhydroxid besonders bevorzugt ist.

Besonders bevorzugt erfolgt die in-situ-Hydrophobierung im Verfahrensschritt (1) in Gegenwart von 100-5000 Gew.-ppm, insbesondere 500-2000 Gew.-ppm, die in-situ-Hydrophobierung fördernde Katalysatoren (G), vorzugsweise Alkalimetallhydroxide, bevorzugt KOH, die vorzugsweise als Lösung, z.B. in Polydimethylsiloxan oder Methanol, dosiert werden, wobei die Gew.-ppm Katalysator (G) jeweils auf die Gesamtmenge der Mischung (1) bezogen sind.

Die Mischung (1) weist vor dem Erhitzen eine Viskosität von vorzugsweise 10 000 mPa.s bis 1 000 000 mPa.s auf, wobei die Viskosität mit einem Kegel-Platte Viskosimeter bei einer Temperatur von 25°C und einem Schergefälle von 1/s gemessen wird.

Die Viskositat der Mischung sinkt beim Erhitzen im Verfahrensschritt (1) vorzugsweise stark ab.
Nach dem Erhitzen der Mischung weist die Viskosität einen Wert von vorzugsweise mindestens 5%, bevorzugt mindestens 10%, der gemessenen Viskosität auf, die die Mischung vor dem Erhitzen hatte, wobei die Viskosität mit einem Kegel-Platte Viskosimeter bei einer Temperatur von 25°C und einem Schergefälle von 1/s gemessen wird.

Nach dem Erhitzen im Verfahrensschritt (1) weist die Mischung eine Viskosität von vorzugsweise 1000 mPa.s bis 200 000 mPa.s auf, wobei die Viskosität mit einem Kegel-Platte Viskosimeter bei einer Temperatur von 25°C und einem Schergefälle von 1/s gemessen wird.

Anschließend an die in-situ-Hydrophobierung im Verfahrensschritt (1) können zu der Mischung noch weitere Komponenten, wie Organopolysiloxane (F), die verschieden von Organopolysiloxanen (A) sind, zugegeben werden.

Als Komponente (F) können alle Polysiloxane eingesetzt werden, die nicht unter die Definitionen der Komponenten (A) oder (D) fallen. Insbesondere werden als Komponenten (F) lineare Polyethersiloxane (F) eingesetzt, bei denen die Polyetherreste seitenständig an lineare Siloxanketten über Kohlenwasserstoffreste, vorzugsweise zweiwertige Kohlenwasserstoffreste, SiC-gebunden sind.
Solche lineare Polyether-Polysiloxan-Copolymere sind z. B. in GB 2 350 117 A beschrieben.

Vorzugsweise handelt es sich bei den Polyethersiloxanen (F) um solche Polyethersiloxane, die ein Siloxanrückgrat mit 10 - 200, insbesondere 20 - 100, Siloxaneinheiten haben und bei denen 2-20%, insbesondere 5-15%, der Siloxaneinheiten einen SiCgebundenen Polyetherrest Z der Formel

-R⁴-O-[CH₂-CH₂O]ₓ-[CH₂-CH(CH₃)O]_{y}-R⁵ (IV)

tragen, wobei
x einen Wert von 0 - 100, bevorzugt 5 - 50, hat,
y einen Wert von 5 - 100, bevorzugt 5 - 50, aufweist, wobei das Verhältnis x:y 4:1 bis 0:1 beträgt,
R⁴ einen zweiwertigen Kohlenwasserstoffrest mit 1-10 Kohlenstoffatomen, vorzugsweise einen C₁₋₁₀-Alkylenrest, bedeutet,
R⁵ gleich oder verschieden ist und ein Wasserstoffatom oder einen gegebenenfalls substituierten Kohlenwasserstoffrest mit 1-30 Kohlenstoffatomen oder ein Carboxyrest der Formel -C(O)R⁶, wobei der Rest R⁶ ein C₁₋₃-Alkylrest, wie Methyl- oder Ethylrest ist, bedeutet.

Bevorzugt ist R⁴ ein Rest der Formel -CH₂-CH₂-CH₂-.

Vorzugsweise ist der Rest R⁵ ein Wasserstoffatom oder ein einwertiger Kohlenwasserstoffrest mit 1-18 C-Atomen. Beispiele für Reste R⁵ sind ein Wasserstoffatom oder ein C₁₋₆-Alkylrest.

Bevorzugt werden als Polyethersiloxane (F) solche der allgemeinen Formel

R₃Si-[OSiR₂]ₒ-[OSiZR]ₚ-OSiR₃ (V),

wobei der Polyetherrest Z und der Rest R die oben dafür angegebene Bedeutung haben,
o eine ganze Zahl von 5 bis 500, bevorzugt 10 bis 100, ist und
p eine ganze Zahl von 1 bis 50, bevorzugt 2 bis 15, ist, eingesetzt.

Vorzugsweise ist in Formel (V) die Summe o+p 20 bis 200, bevorzugt 20 bis 100, ist, wobei vorzugsweise durchschnittlich 2-20%, insbesondere 5-15%, der Siloxaneinheiten o+p einen SiCgebundenen Polyetherrest Z aufweisen.

Der Trübungspunkt der Polyethersiloxane (F) wird nach DIN EN 1890 Verfahren A gemessen.
Der Trübungspunkt der Polyethersiloxane (F) ist vorzugsweise kleiner als 40°C, bevorzugt kleiner als 30°C, besonders bevorzugt kleiner als 25°C, d.h. die Polyethersiloxane sind bei 25°C zu weniger als 1% in Wasser löslich.

Als Komponente (F) können auch verzweigte Polyethersiloxane eingesetzt werden. Beispiele für verzweigte Polyethersiloxane sind solche, bei denen die Polyetherreste seitenständig an lineare Siloxanketten über Kohlenwasserstoffreste, vorzugsweise zweiwertige Kohlenwasserstoffreste, SiC-gebunden sind und wobei diese linearen Siloxanketten über seitenständige organische Brücken miteinander verbunden.
Beispiele für diese organischen Brücken sind SiC-gebundene Lineare oder verzweigte organische Reste, vorzugsweise zweiwertige Kohlenwasserstoffreste, die ein oder mehrere Heteroatome ausgewählt aus der Gruppe der Sauerstoff- und Stickstoffatome enthalten können, wie Alkylenreste, SiC-gebundene Polyetherreste, die über Alkylenreste an die Siloxanketten gebunden sind, und SiC-gebundene zweiwertige Kohlenwasserstoffreste, wie Alkylenreste, die Polyether- und Urethangruppen enthalten.

Besonders gut geeignet als verzweigte Polyethersiloxane (F) sind verzweigte Polyether-Polysiloxan-Copolymere, wie sie z. B. in EP 1 076 073 A1, EP 1 424 117 A2 oder WO 2006/128624 A1 als Komponente von Entschäumern beschrieben sind.

Bevorzugte verzweigte Polyether-Polysiloxan-Copolymere sind solche, bei denen die Siloxanketten über seitenständige zweiwertige SiC-gebundene Kohlenwasserstoffreste, die Polyetherreste und Urethangruppen enthalten, miteinander verbunden sind.
Diese Polyether-Polysiloxan-Copolymere und deren Herstellung sind in WO 2006/128624 A1, insbesondere auf Seite 3, Zeile 8 bis Seite 13, Zeile 38, beschrieben.

Falls die erfindungsgemäßen Zusammensetzungen als Komponente (F) Polyethersiloxane enthalten, dann enthalten sie Polyethersiloxane (F) in Mengen von vorzugsweise 1 bis 200 Gewichtsteilen, bevorzugt 2 bis 100 Gewichtsteilen, jeweils bezogen auf 100 Gewichtsteile Komponente (A).

In einer weiteren Ausführungsform enthält die erfindungsgemäße Zusammensetzung als Komponente (F) von (A) verschiedene Organopolysiloxane aus Einheiten der allgemeinen Formel

Rₖ(R⁶O)ₗSiO_{(4-k-l)/2} (VI),

worin
R die oben dafür angegebene Bedeutung hat,
R⁶ gleich oder verschieden sein kann und einen einwertigen, linearen und/oder verzweigten Kohlenwasserstoffrest mit mindestens 6 Kohlenstoffatomen, vorzugsweise 6-30 Kohlenstoffatomen, bedeutet,
k 0, 1, 2 oder 3 ist und
l 0, 1, 2 oder 3 ist, durchschnittlich 0,005 bis 0,5 ist,
mit der Maßgabe, dass die Summe k+l≤3 ist, durchschnittlich 1,9 bis 2,1 ist.

Derartige Organopolysiloxane (F) der Formel (VI) sind beispielsweise durch alkalisch katalysierte Kondensation von silanolterminierten Polydimethylsiloxanen einer Viskosität 50 bis 50 000 mPa·s bei 25°C und aliphatischen Alkoholen mit mindestens 6 Kohlenstoffatomen, wie Isotridecylalkohol, n-Octanol, Stearylalkohol, 4-Ethyl-hexadecanol oder Eicosanol, zugänglich.

Falls die erfindungsgemäßen Zusammensetzungen als Komponente (F) Organopolysiloxane der Formel (VI) enthalten, dann enthalten sie sie in Mengen von vorzugsweise 0,5 bis 30 Gewichtsteilen, bevorzugt 1 bis 10 Gewichtsteilen, jeweils bezogen auf 100 Gewichtsteile Komponente (A).

Die erfindungsgemäßen Zusammensetzungen können neben den Komponenten (A) bis (G) weitere Bestandteile z.B. herstellungsbedingte Verunreinigungen, wie cyclische Siloxane, enthalten. Vorzugsweise sind keine oder weniger als 5% dieser Bestandteile enthalten.

Die erfindungsgemäßen Zusammensetzungen sind bevorzugt viskose klare bis opake farblose Flüssigkeiten.

Die erfindungsgemäßen Zusammensetzungen haben nach dem Verfahrenschritt (1) und (2) eine Viskosität von vorzugsweise 1000 bis 200 000 mPas, besonders bevorzugt von 5000 bis 50 000 mPas, jeweils bei 25°C und 1013 hPa.

Das erfindungsgemäße Verfahren kann diskontinuierlich, halbkontinuierlich oder vollkontinuierlich durchgeführt werden.

Bei den erfindungsgemäßen Zusammensetzungen kann es sich um Lösungen, Dispersionen oder Pulver handeln.

Gegenstand der Erfindung ist daher ein Verfahren zur Herstellung von Emulsionen von hydrophobe Kieselsäuren enthaltenden Entschäumerzusammensetzungen, bei dem die nach dem erfindungsgemäßen Verfahren hergestellten Entschäumerzusammensetzungen mit
Emulgatoren,
ggf. Verdickern
und Wasser
gemischt werden.

Zur Herstellung der Emulsionen der nach dem erfindungsgemäßen Verfahren hergestellten Entschäumerzusammensetzungen können alle Emulgatoren eingesetzt werden, die dem Fachmann zur Herstellung von Siliconemulsionen bekannt sind, wie z. B. anionische, kationische oder nichtionogene Emulgatoren. Bevorzugt werden Emulgatormischungen eingesetzt, wobei mindestens ein nichtionogener Emulgator, vorzugsweise ausgewählt aus der Gruppe der Sorbitanfettsäureester, ethoxylierten Sorbitanfettsäureester, ethoxylierten Fettsäuren, ethoxylierten linearen oder verzweigten Alkohole mit 10 bis 20 Kohlenstoffatomen und/oder Glycerinester, enthalten sein sollte. Weiterhin können als Verdicker bekannte Verbindungen, wie Polyacrylsäure, Polyacrylate, Celluloseether, wie Carboxymethylcellulose und Hydroxyethylcellulose, natürliche Verdicker, wie z. B. Xanthan Gum, und Polyurethane sowie Konservierungsmittel und andere übliche und dem Fachmann zur Herstellung von Siliconemulsionen bekannte Zusätze zugesetzt werden.

Die kontinuierliche Phase der erfindungsgemäßen Emulsionen ist bevorzugt Wasser. Es können jedoch auch erfindungsgemäße Zusammensetzungen in Form von Emulsionen hergestellt werden, bei denen die kontinuierliche Phase durch die Komponenten (A) bis (G) gebildet wird. Es kann sich dabei auch um multiple Emulsionen handeln.

Verfahren zur Herstellung von Siliconemulsionen sind bekannt. Üblicherweise erfolgt die Herstellung durch einfaches Verrühren aller Bestandteile und ggf. anschließendes Homogenisieren mit Strahldispergatoren, Rotor-Stator-Homogenisatoren, Kolloidmühlen oder Hochdruckhomogenisatoren.

Falls es sich bei der erfindungsgemäßen Zusammensetzung um Emulsionen handelt, sind Öl in Wasser Emulsionen enthaltend 5 bis 50 Gew.-% Komponenten (A) bis (G), 1 bis 20 Gew.-% Emulgatoren und Verdicker und 30 bis 94 Gew.-% Wasser bevorzugt.

Die erfindungsgemäßen Zusammensetzungen können auch als frei fließende Pulver formuliert werden. Diese sind z. B. bei der Anwendung in pulverförmigen Waschmitteln bevorzugt. Die Herstellung dieser Pulver ausgehend von der Mischung der Komponenten (A) bis (E), gegebenenfalls (F) und gegebenenfalls (G) erfolgt nach dem Fachmann bekannten Verfahren, wie Sprühtrocknung oder Aufbaugranulation und mit dem Fachmann bekannten Zusätzen.

Gegenstand der Erfindung ist daher ein Verfahren zur Herstellung von Pulvern, bei dem die nach dem erfindungsgemäßen Verfahren hergestellten Entschäumerzusammensetzungen mit
Trägermaterialien
gemischt werden.

Die erfindungsgemäßen Pulver enthalten bevorzugt 2 bis 20 Gew.-% der erfindungsgemäßen Zusammensetzung, die die Komponenten (A) bis (G) enthalten. Als Träger kommen z. B. Zeolithe, Natriumsulfat, Cellulosederivate, Harnstoff und Zucker zum Einsatz. Die erfindungsgemäßen Pulver enthalten 50 bis 95 Gew.-% Trägermaterialien. Weitere Bestandteile der erfindungsgemäßen Pulver können z. B. Wachse sein oder organische Polymere, wie sie z. B. in EP-A 887 097 und EP-A 1 060 778 beschrieben sind.

Die erfindungsgemäßen Entschäumerzusammensetzungen können überall dort eingesetzt werden, wo störender Schaum unterdrückt werden soll. Das ist z. B. in nichtwässrigen Systemen wie bei der Teerdestillation oder der Erdölverarbeitung der Fall. Insbesondere eigenen sich die erfindungsgemäßen Entschäumerzusammensetzungen zur Bekämpfung von Schaum in wässrigen Tensidsystemen, für die Anwendung in Wasch- und Reinigungsmitteln, zur Bekämpfung von Schaum in Abwasseranlagen, bei Textilfärbeverfahren, bei der Erdgaswäsche, in Polymerdispersionen, und zum Entschäumen von bei der Zellstoffherstellung anfallenden wässrigen Medien.

Ein weiterer Gegenstand der vorliegenden Erfindung ist daher ein Verfahren zum Entschäumen und/oder zur Verhinderung des Schäumens von Medien, indem die erfindungsgemäßen Zusammensetzungen oder deren Emulsionen oder Pulver mit den Medien vermischt werden.
Vorzugsweise werden die erfindungsgemäßen Zusammensetzungen zum Entschäumen und/oder zur Verhinderung des Schäumens bei der Zellstoffherstellung anfallenden wässrigen Medien eingesetzt.

Die erfindungsgemäßen Entschäumerszusammensetzungen können weiterhin in Wasch- und Reinigungsmittel und Pflegemittel, wie z.B. Weichspüler, eingesetzt werden, wobei die erfindungsgemäßen Entschäumerzusammensetzungen in Substanz oder in Form von Emulsionen oder Pulvern eingesetzt werden können.

Der Zusatz der erfindungsgemäßen Zusammensetzung zu den schäumenden Medien kann direkt erfolgen, gelöst in geeigneten Lösungsmitteln, wie Toluol, Xylol, Methylethylketon oder tert.-Butanol, als Pulver oder als Emulsion. Die zur Erzielung der gewünschten Entschäumerwirkung notwendige Menge richtet sich z. B. nach der Art des Mediums, der Temperatur und der auftretenden Turbulenz.

Bevorzugt werden die erfindungsgemäßen Zusammensetzungen in Mengen von 0,1 Gew.-ppm bis 1 Gew.-%, insbesondere in Mengen von 1 bis 100 Gew.-ppm, bezogen auf das Gesamtgewicht des zu entschäumenden Mediums, zum schäumenden Medium zugegeben.

Das erfindungsgemäße Verfahren wird vorzugsweise beim Druck der umgebenden Atmosphäre, also bei etwa 900 bis 1100 hPa, durchgeführt. Das erfindungsgemäße Verfahren kann auch bei höheren oder niedrigeren Drücken durchgeführt werden, wie etwa bei 3000 bis 4000 hPa oder 1 bis 10 hPa.

Überraschenderweise wurde gefunden, dass die Wirksamkeit und Handhabbarkeit der erfindungsgemäßen Entschäumerformulierungen durch das erfindungsgemäße Verfahren wesentlich verbessert wird. Die erfindungsgemäßen Entschäumerformulierungen zeichnen sich besonders durch eine sehr gute Handhabbarkeit und Dosierbarkeit sowie durch eine hohe Wirksamkeit sowohl bezüglich des sofortigen Schaumzerfalls als auch der Langzeitwirkung aus.

Die erfindungsgemäßen Zusammensetzungen haben den Vorteil, dass sie sich durch eine hohe, lang anhaltende Wirksamkeit in unterschiedlichsten Medien bei geringen Zusatzmengen auszeichnen. Das ist sowohl ökonomisch als auch ökologisch außerordentlich vorteilhaft.

Das erfindungsgemäße Verfahren hat den Vorteil, dass es einfach in der Durchführung und sehr wirtschaftlich ist.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

### Prüfungen der Entschäumerwirksamkeit in Schwarzablauge

400 ml Schwarzablauge aus dem Zellstoffprozess (Hardwood der Fa. UPM Kymmene Oy aus Kuusankoski, Finnland) werden in einer auf 80°C thermostatisierten 1000ml Umpumpapparatur mit einer Umpumpgeschwindigkeit von 1,5 l/min umgepumpt. Sobald das Schaumniveau eine Höhe von 75 mm erreicht hat, wird der Entschäumer (10 mg bezogen auf die Entschäumerformulierungen von Beispiel 1 und die Vergleichsversuche V1 bis V3) zudosiert, Schaumzerfallszeit und das niedrigste Schaumniveau, das nach Zugabe von Entschäumer und einsetzendem Schaumzerfall erreicht wird, werden festgehalten. Je kleiner die Schaumzerfallszeit t1 und je niedriger das Schaumniveau h1 sind, desto besser ist die Schnellwirkung eines Entschäumers.
Danach wird die Langzeitwirkung des Entschäumers bestimmt, welche die Zeitspanne t2 darstellt, die benötigt wird, um vom niedrigsten Schaumniveau zum ursprünglichen Schaumniveau (75mm) zu kommen.

### Verwendete Stoffe:

Siloxan A: ein mit Trimethylsiloxygruppen terminiertes Polydimethylsiloxan mit einer Viskosität von 8000 mm²/s und einem Anteil an Silanolgruppen von 350 Gew. ppm
Füllstoff B: eine hydrophile pyrogene Kieselsäure mit einer Oberfläche von 300 m²/g erhältlich unter der Bezeichnung HDK^{®} T30 bei der Wacker Chemie AG München
Füllstoff C: eine hydrophobierte pyrogene Kieselsäure mit einer Oberfläche von 150 m²/g erhältlich unter der Bezeichnung HDK^{®} H2000 bei der Wacker Chemie AG München. Diese Kieselsäure hatte einen Kohlenstoffgehalt von 2,8 Gew.-% und eine Methanolbenetzbarkeit von 65 Gew.-%.
Organopolysiloxanharz D: ein bei Raumtemperatur festen Siliconharzes aus Trimethylsiloxy- und SiO₂-Einheiten im Molverhältnis 0,61/1 mit einer gewichtsmittleren Molmasse von 5728 g/mol (bezogen auf Polystyrolstandard) und einem Gehalt an Si-gebunden Hydroxylgruppen von 0,8 Gew.-%

### Wasserunlösliche organische Verbindung E:

Kohlenwasserstoffgemisch mit einem Siedebereich von 230 bis 270°C bei 1013 hPa.

Polyethersiloxan F: Dieses Polymer wird wie folgt hergestellt: 67 g eines mit Methylgruppen terminierten Siloxans aus Dimethylsiloxy- und Hydrogenmethylsiloxyeinheiten mit einem Aktivwasserstoffgehalt von 0,133 % und einer Viskosität von 72 mm²/s (25°C) werden unter kräftigem Rühren mit 408 g eines Allylpolyethers (560 ppm H₂O-Gehalt) mit einem PO/EO-Verhältnis von 4,0und einer Jodzahl von 11,2 vermischt und auf 100°C erwärmt. Durch Zugabe von 0,5 ml einer 2 %-igen Lösung von Hexachloroplatinsäure in Isopropanol wird die Hydrosilylierung gestartet, was sich in einer schwach exothermen Reaktion zeigt.

Das Reaktionsgemisch wird bei 100 bis 110°C gehalten, bis ein klares Copolymer erhalten wird und kein Aktivwasserstoff mehr nachweisbar ist. Das Polysiloxan mit seitenständigen Polyethergruppen, hat eine Viskosität von 870 mm²/s (25°C) und einen Trübungspunkt von kleiner 25°C.

Katalysator G: eine 20%ige Lösung von KOH in Methanol

### Beispiel 1 (erfindungsgemäß):

83 Teile Organopolysiloxan A, 6 Teile Füllstoff B, 2 Teile Füllstoff C, 2,5 Teile Organopolysiloxanharz D und 2,5 Teile Mineralöl E werden vermischt und homogenisiert und in Gegenwart von 7500 ppm Katalysator G 4h auf 150°C erhitzt. Die Viskosität der Mischung wird vor und nach dem Erhitzen, also vor und nach der in-situ-Hydrophobierung bestimmt, wobei die Viskosität mit einem Kegel-Platte Viskosimeter bei einer Temperatur von 25°C und einem Schergefälle von 1/s gemessen wird. Die Ergebnisse sind in der Tabelle 1 zusammengefasst.
Anschließend an das Erhitzen werden zu der Mischung noch 4 Teile Polyethersiloxan F zugegeben und homogen eingemischt.

### Vergleichbeispiel 1 (nur in situ hydrophobierte Kieselsäure):

83 Teile Organopolysiloxan A, 8 Teile Füllstoff B, 2,5 Teile Organopolysiloxanharz D und 2,5 Teile Mineralöl E werden vermischt und homogenisiert und in Gegenwart von 7500 ppm Katalysator G 4h auf 150°C erhitzt. Die Viskosität der Mischung wird vor und nach dem Erhitzen bestimmt, wobei die Viskosität mit einem Kegel-Platte Viskosimeter bei einer Temperatur von 25°C und einem Schergefälle von 1/s gemessen wird. Die Ergebnisse sind in der Tabelle 1 zusammengefasst. Anschließend an das Erhitzen werden zu der Mischung noch 4 Teile Polyethersiloxan F zugegeben und homogen eingemischt.

### Vergleichbeispiel 2 (nur vorbehandelte hydrophobierte Kieselsäure):

83 Teile Organopolysiloxan A, 8 Teile Füllstoff C, 2,5 Teile Organopolysiloxanharz D und 2,5 Teile Mineralöl E werden vermischt und homogenisiert und in Gegenwart von 7500 ppm Katalysator G 4h auf 150°C erhitzt. Die Viskosität der Mischung wird vor und nach dem Erhitzen bestimmt, wobei die Viskosität mit einem Kegel-Platte Viskosimeter bei einer Temperatur von 25°C und einem Schergefälle von 1/s gemessen wird. Die Ergebnisse sind in der Tabelle 1 zusammengefasst. Anschließend an das Erhitzen werden zu der Mischung noch 4 Teile Polyethersiloxan F zugegeben und homogen eingemischt.

### Vergleichbeispiel 3 (in situ hydrophobierte Kieselsäure und vorbehandelte Kieselsäure; die in situ Hydrophobierung erfolgt vor der Zugabe der vorbehandelten Kieselsäure):

83 Teile Organopolysiloxan A, 6 Teile Füllstoff B, 2,5 Teile Organopolysiloxanharz D und 2,5 Teile Mineralöl E werden vermischt und homogenisiert und in Gegenwart von 7500 ppm Katalysator G 4h auf 150°C erhitzt. Die Viskosität der Mischung wird vor und nach dem Erhitzen bestimmt, wobei die Viskosität mit einem Kegel-Platte Viskosimeter bei einer Temperatur von 25°C und einem Schergefälle von 1/s gemessen wird. Die Ergebnisse sind in der Tabelle 1 zusammengefasst. Anschließend an das Erhitzen werden zu der Mischung noch 2 Teile Füllstoff C und 4 Teile Polyethersiloxan F zugegeben und homogen eingemischt

**Tabelle 1: Aussehen und Viskositäten von Beispiel 1 und Vergleichsversuchen V1-V3**

| Beispiel/ Vergleichsversuch (ohne Polyethersiloxan F) | Viskosität in mPas bei 25°C und D = 1/s Kegel/Platte Physica) | | Aussehen |
|---|---|---|---|
| | Nach dem Ausheizen | Vor dem Ausheizen | |
| 1 (erfindungsgemäß) | 50.500 | 490.000 | Handhabbares Compound, keine Füllstoffsedimentation |
| V1 (nicht erfindungsgemäß) | 77.200 | 330.000 | Hochviskoses Compound, schlecht handhabbar |
| V2 (nicht erfindungsgemäß) | 23.000 | 9.600 | Niederviskoses Compound, neigt zur Füllstoffsedimentation |
| V3 (nicht erfindungsgemäß) | 64.700 | 235.000 | Hochviskoses Compound, schlecht handhabbar |

Die Entschäumerzusammensetzungen gemäß dem Beispiel 1 bzw. gemäß denVergleichsversuchen und nach Einmischung des Polyethersiloxans F werden jeweils mit Mineralöl E auf eine 40 Gew.-%ige Lösung verdünnt und mittels einer Pipette zur Prüfung der jeweiligen Wirksamkeit der Entschäumerzusammensetzungen zur Schwarzablauge zudosiert.
Die Ergebnisse der Prüfung der Wirksamkeit sind in der Tabelle 2 zusammengefasst.

**Tabelle 2: Ergebnisse der Prüfung der Entschäumerwirksamkeit in Hartholz Schwarzablauge**

| Beispiel/ Vergleichsversuch | Schaumzerfallszeit t1 in [s] | Schaumniveau h1 nach Schaumzerfall [mm] | Langzeitwirkung t2 in [s] |
|---|---|---|---|
| 1(erfindungsgemäß, Füllstoff B und Füllstoff C werden gemeinsam ausgeheizt) | 10 | 10 | 597 |
| V1 (nicht erfindungsgemäß, ohne Füllstoff C) | 21 | 18 | 480 |
| V2(nicht erfindungsgemäß, ohne Füllstoff B) | 12 | 13 | 403 |
| V3 (nicht erfindungsgemäß, Füllstoff C wird nach dem Ausheizen von Füllstoff B zugegeben) | 14 | 13 | 365 |

Aus den in der Tabelle 2 zusammengefassten Ergebnissen ist deutlich ersichtlich, dass,
- Vergleichsversuch V1 zwar eine ähnliche Langzeitwirkung besitzt, jedoch eine signifikant schlechteren Schaumzerfall als das erfindungsgemäße Beispiel 1 hat. Außerdem ist es aufgrund der fast doppelt so hohen Viskosität wesentlich schlechter handhabbar.
- Vergleichsversuch V2 in der Schnellwirkung gut ist, die Wirkung jedoch nicht lange anhält. Die Neigung zur Füllstoffsedimentation ist ebenso ein deutlicher Nachteil im Vergleich zu dem erfindungsgemäß hergestellten Entschäumer. Auf der anderen Seite ist die ausschließliche Verwendung von bereits hydrophobierter also vorbehandelter Kieselsäure, wie Füllstoff C, aufgrund des höheren Preises im Vergleich zu hydrophiler Kieselsäure auch aus Kostengründen nachteilig.
- Vergleichsversuch V3 eine gute Schnellwirkung besitzt, aber in der Langzeitwirkung deutlich schlechter ist als Beispiel 1.

Da die vorbehandelte hydrophobe Kieselsäure (Füllstoff C) mit der Methanolbenetzbarkeit von 65 Gew.-% und dem Kohlenstoffgehalt von 2,8 Gew.-% bereits als vollständig hydrophobiert angesehen werden kann, auf der anderen Seite aber keinen Beitrag zu Hydrophobierung der hydrophilen Kieselsäure Leistet, war davon auszugehen, dass der Zeitpunkt der Zugabe dieses Füllstoffes keinen Einfluss auf die Produkteigenschaften haben kann. Deshalb war es überraschend, dass bei Durchführung des erfindungsgemäßen Verfahrens entsprechend Beispiel 1 Entschäumerformulierungen erhalten werden, die im Hinblick auf Handhabbarkeit (moderate Viskosität und keine Füllstoffsedimentation), Schnellwirkung (Sofortiger Schaumzerfall und Schaumhöhe) und Langzeitwirkung den nach dem Stand der Technik hergestellten Formulierungen überlegen sind.

### Beispiel 2:

Es werden 100 Teile einer Entschäumerformulierung von Beispiel 1 werden bei 60°C mit 30 Teilen Sorbitanmonstearat (erhältlich unter der Bezeichnung "Span 60" bei Croda GmbH D-Nettetal) und 20 Teilen Polyoxyethylen(20)sorbitanmonostearate (erhältlich unter der Bezeichnung "Tween 60" bei Uniqema D-Emmerich) vermischt und schrittweise mit 500 Teilen Wasser verdünnt. Zu dieser Mischung werden 2 Teile einer Polyacrylsäure (erhältlich unter der Bezeichnung "Carbopol 934" bei BF Goodrich D-Neuss) gegeben, vermischt und weitere 345 Teile Wasser und 3 Teile eines Konservierungsmittels auf Isothiazolinonbasis (erhältlich unter der Bezeichnung "Acticide MV" bei der Thor-Chemie, D-Speyer) zugegeben. Anschließend wird die Emulsion bei 100 bar mit einem Hochdruckhomogenisator homogenisiert und mit 10%iger NaOH auf einen pH-Wert von 6-7 eingestellt.
Die erhaltene Entschäumeremulsion war hervorragend geeignet, um wässrige Tensidlösungen zu entschäumen.

### Beispiel 3:

35 ml einer 2 %igen Lösung eines hochmolekularen Copolymers aus Acrylsäure, Methacrylsäurestearat und Pentaerythritoldiallylether (im molaren Verhältnis 100:2:0,3) (die, wenn sie neutralisiert wird, eine Viskosität von 17 500 mm²/s aufweist) wurden in einem Becherglas vorgelegt, und unter intensivem Mischen mit einem Flügelrührer wurden 10 g der Entschäumerformulierung nach Beispiel 2 langsam zugegeben, so dass nach 10 Minuten Rühren eine Emulsion der Entschäumerformulierung in der Polymerlösung vorlag. Unter fortgesetztem Rühren wurden zu dieser Emulsion 88,5 g leichte Soda gegeben und anschließend das Wasser unter fortgesetztem Mischen unter Vakuum entfernt. Danach wurden 0,5 g einer hydrophilen Kieselsäure mit einer BET-Oberfläche von 200 m²/g (erhältlich bei der Wacker-Chemie GmbH unter der Bezeichnung HDK^{®} N20) zugemischt.
Es wurde ein weißes, rieselfähiges Pulver erhalten. Dieses wurde mit Erfolg zur Schaumverhinderung in pulverförmigen Waschmitteln oder in pulverförmigen Pflanzenschutzkonzentraten eingesetzt.

### Beispiel 4:

Die Verfahrensweise nach Beispiel 1 wird wiederholt, mit der Abänderung, dass anstelle der pyrogenen hydrophobierten Kieselsäure (Füllstoff C) eine gefällte hydrophobe Kieselsäure als Komponente (C) mit einer BET Oberfläche von 90 m²/g, einem Kohlenstoffgehalt von 3% und einer Methanolbenetzbarkeit von 60 % (erhältlich unter der Bezeichnung Sipernat D10 bei der Evonik-Degussa GmbH, Frankfurt am Main) eingesetzt wird. Im Unterschied zur Verfahrensweise in Beispiel 1 werden die Füllstoffe (B) und (C) bei 150°C in die Mischung aus (A) und (D) eingemischt und dann wie im Beispiel 1 in Gegenwart von 7500 ppm Katalysator (G) weitere 4h erhitzt.
Es wurde ebenfalls ein Entschäumer mit besonders guter Wirksamkeit erhalten.

## Patentansprüche

1. Verfahren zur Herstellung von hydrophobe Kieselsäure enthaltenden Entschäumerzusammensetzungen, **dadurch gekennzeichnet, dass**
(1) eine Mischung enthaltend
(A) Organopolysiloxane mit einer Viskosität von 10 bis 10 000 000 mm²/s bei 25°C und 1013 hPa aus Einheiten der Formel (I)
Rₐ(R¹O)_{b}SiO_{(4-a-b)/2} (I),
worin
R gleich oder verschieden sein kann und einen einwertigen, gegebenenfalls substituierten Kohlenwasserstoffrest mit 1-30 Kohlenstoffatomen, vorzugsweise 1-18 Kohlenstoffatomen, oder ein Wasserstoffatom bedeutet,
R¹ gleich oder verschieden sein kann und ein Wasserstoffatom oder einen einwertigen Kohlenwasserstoffrest mit 1-4 Kohlenstoffatomen bedeutet,
a 0, 1, 2 oder 3 ist und
b 0, 1, 2 oder 3 ist,
mit der Maßgabe, dass die Summe a+b≤3 ist und bei mehr als 50 % aller Einheiten der Formel (I) im Organopolysiloxan (A) die Summe a+b gleich 2 ist, wobei die Viskosität der Organopolysiloxane (A) durch die Anzahl der Einheiten der Formel (I) bestimmt wird,
(B) hydrophile Kieselsäuren mit einer BET-Oberfläche von 20-500 m²/g, wobei die hydrophilen Kieselsäuren in Mengen von 0,1 bis 20 Gew.-teilen, bezogen auf 100 Gew.-teile Organopolysiloxane (A), eingesetzt werden,
(C) hydrophobe Kieselsäure mit einer BET-Oberfläche von 50-500 m²/g, wobei die hydrophoben Kieselsäuren in Mengen von 0,1 bis 20 Gew.-teilen, bezogen auf 100 Gew.-teile Organopolysiloxane (A), eingesetzt werden,
gegebenenfalls
(D) Organopolysiloxanharze aus Einheiten der,Formel
R²ₑ(R³O)_{f}SiO_{(4-e-f)/2} (II),
worin R² die Bedeutung von R und R³ Bedeutung von R¹ hat,
e 0, 1, 2 oder 3 ist und
f 0, 1, 2 oder 3 ist,
mit der Maßgabe, dass die Summe e+f≤3 ist und in weniger als 50 % aller Einheiten der Formel (II) im Organopolysiloxanharz die Summe e+f gleich 2 ist,
und gegebenenfalls
(E) wasserunlösliche organische Verbindungen,
bei Temperaturen von 50-250°C erhitzt wird,
bis die Viskosität einen Wert von weniger als 50 %, vorzugsweise weniger als 40 %, bevorzugt weniger als 30 %, der gemessenen Viskosität aufweist, die die Mischung vor dem Erhitzen hatte, wobei die Viskosität mit einem Kegel-Platte Viskosimeter bei einer Temperatur von 25°C und einem Schergefälle von 1/s gemessen wird, und
(2) anschließend an die in (1) durchgeführte in-situ-Hydrophobierung der hydrophilen Kieselsäuren in Gegenwart der hydrophoben Kieselsäuren gegebenenfalls
(F) Organopolysiloxane, die verschieden von (A) sind, eingemischt werden.

2. Verfahren nach Anspruch 1, **dadurch gekennzeichnet, dass** die Mischung in (1) in Gegenwart von die in-situ-Hydrophobierung fördernde Katalysatoren (G), vorzugsweise Alkalimetallhydroxide, erhitzt wird.

3. Verfahren nach Anspruch 1 oder 2, **dadurch gekennzeichnet, dass** als Organopolysiloxane (A) lineare Organopolysiloxane der Formel
R_{3-g}(R¹O)_{g}Si-[OSiR₂]ₙ-OSi(OR¹)_{g}R_{3-g} (III),
worin R und R¹ die im Anspruch 1 dafür angegebene Bedeutung haben,
g 0 oder 1 ist und
n eine ganze Zahl ist und einen solchen Wert hat, dass die Viskosität der Organopolysiloxane (A) 10 - 10 000 000 mm²/s bei 25°C und 1013 hPa, beträgt,
mit der Maßgabe, dass die Organopolysiloxane der Formel (III) durchschnittlich einen Gehalt an Si-gebundenen OH-Gruppen von 30-500 Gew.-ppm aufweisen,
eingesetzt werden.

4. Verfahren nach Anspruch 1, 2 oder 3, **dadurch gekennzeichnet, dass**
als hydrophobe Kieselsäure (C) solche mit einem Kohlenstoffgehalt von 0,1 bis 5,0 Gew.-% und einer Methanolbenetzbarkeit von größer als 30 Gew.-%, d.h. Wasser kann diese hydrophobe Kieselsäure nur dann benetzen, wenn es mindestens 30 Gew.-% Methanol enthält, eingesetzt wird.

5. Verfahren nach einem der Ansprüche 1 bis 4, **dadurch gekennzeichnet, dass**
das Gewichtsverhältnis der eingesetzten hydrophilen Kieselsäuren (B) zu den hydrophoben Kieselsäuren (C) 95:5 bis 5:95, vorzugsweise 80:20 bis 20:80, besonders bevorzugt 70:30 bis 30:70, beträgt.

6. Verfahren nach einem der Ansprüche 1 bis 5, **dadurch gekennzeichnet, dass** als Organopolysiloxane (D) solche eingesetzt werden, die im Wesentlichen aus R²₃SiO_{1/2} (M)-Einheiten und SiO_{4/2} (Q)-Einheiten bestehen, wobei R² die im Anspruch 1 dafür angegebene Bedeutung hat, und wobei das molare Verhältnis von M- zu Q-Einheiten vorzugsweise im Bereich von 0,5 bis 2,0, bevorzugt im Bereich von 0,6 bis 1,0, liegt.

7. Verfahren nach einem der Ansprüche 1 bis 6, **dadurch gekennzeichnet, dass** als wasserunlösliche organische Verbindungen (E) solche ausgewählt aus der Gruppe der Mineralöle, nativen Öle, Isoparaffinen, Polyisobutylenen, Rückständen aus der Oxoalkoholsynthese, Estern niedermolekularer synthetischer Carbonsäuren, Fettsäureestern, Fettalkoholen, Ethern niedermolekularer Alkohole, Phthalaten, Estern der Phosphorsäure und Wachsen eingesetzt werden.

8. Verfahren nach einem der Ansprüche 1 bis 7, **dadurch gekennzeichnet, dass**
als (F) Organopolysiloxane, die verschieden von (A) sind, lineare oder verzweigte Polyethersiloxane eingesetzt werden.

9. Verfahren zur Herstellung von Emulsionen von hydrophobe Kieselsäuren enthaltenden Entschäumerzusammensetzungen, **dadurch gekennzeichnet, dass**
die nach den Ansprüchen 1 bis 8 hergestellten Entschäumerzusammensetzungen mit
Emulgatoren,
ggf. Verdickern
und Wasser
gemischt werden.

10. Verfahren zur Herstellung von Pulvern, **dadurch gekennzeichnet, dass**
die nach den Ansprüchen 1 bis 8 hergestellten Entschäumerzusammensetzungen mit
Trägermaterialien
gemischt werden.

11. Verfahren zum Entschäumen und/oder zur Verhinderung des Schäumens von Medien, indem die nach den Ansprüchen 1 bis 8 hergestellten Entschäumerzusammensetzungen oder die nach Anspruch 9 hergestellten Emulsionen oder die nach Anspruch 10 hergestellten Pulver mit den Medien vermischt werden.

12. Verfahren nach Anspruch 11, **dadurch gekennzeichnet, dass** bei der Zellstoffherstellung anfallende wässrige Medien eingesetzt werden.

## Claims

1. Method for producing defoamer compositions comprising hydrophobic silica, **characterized in that**
(1) a mixture comprising
(A) organopolysiloxanes having a viscosity of 0 to 10 000 000 mm²/s at 25°C and 1013 hPa composed of units of the formula (I)
Rₐ(R¹O)_{b}SiO_{(4-a-b)/2} (I),
in which
R may be identical or different and denotes a monovalent, optionally substituted hydrocarbon radical having 1-30 carbon atoms, preferably 1-18 carbon atoms, or a hydrogen atom,
R¹ may be identical or different and denotes a hydrogen atom or a monovalent hydrocarbon radical having 1-4 carbon atoms,
a is 0, 1, 2 or 3, and
b is 0, 1, 2 or 3,
with the proviso that the sum a+b is ≤3 and in more than 50% of all the units of the formula (I) in the organopolysiloxane (A), the sum a+b is 2,
the viscosity of the organopolysiloxanes (A) being determined by the number of units of the formula (I),
(B) hydrophilic silicas having a BET surface area of 20-500 m²/g, the hydrophilic silicas being used in amounts of 0.1 to 20 parts by weight, based on 100 parts by weight of organopolysiloxanes (A),
(C) hydrophobic silica having a BET surface area of 50-500 m²/g, the hydrophobic silicas being used in amounts of 0.1 to 20 parts by weight, based on 100 parts by weight of organopolysiloxanes (A),
optionally
(D) organopolysiloxane resins composed of units of the formula
R²ₑ(R³O)_{f}SiO_{(4-e-f)/**2**} (II),
in which R² has the definition of R and R³ has the definition of R¹,
e is 0, 1, 2 or 3, and
f is 0, 1, 2 or 3,
with the proviso that the sum e+f is ≤3 and in less than 50% of all the units of the formula (II) in the organopolysiloxane resin, the sum e+f is 2,
and optionally
(E) water-insoluble organic compounds,
is heated at temperatures of 50-250°C,
until the viscosity has a value of less than 50%, preferably less than 40%, more preferably less than 30%, of the measured viscosity which the mixture had prior to heating, the viscosity being measured using a cone/plate viscometer at a temperature of 25°C and a shear rate of l/s, and
(2) subsequent to the in situ hydrophobization of the hydrophilic silicas carried out in (1) in the presence of the hydrophobic silicas, optionally
(F) organopolysiloxanes which are different from (A)
are mixed in.

2. Method according to Claim 1, **characterized in that** the mixture in (1) is heated in the presence of catalysts (G) promoting the in situ hydrophobization, preferably alkali metal hydroxides.

3. Method according to Claim 1 or 2, **characterized in that** organopolysiloxanes (A) used comprise linear organopolysiloxanes of the formula
R_{3-g}(R¹O)_{g}Si-[OSiR₂]ₙ-OSi(OR¹)_{g}R_{3-g} (III),
in which R and R¹ have the definition indicated for them in claim 1,
g is 0 or 1, and
n is an integer and has a value such that the viscosity of the organopolysiloxanes (A) is 10 - 10 000 000 mm²/s at 25°C and 1013 hPa,
with the proviso that the organopolysiloxanes of the formula (III) have on average an Si-bonded OH group content of 30-500 ppm by weight.

4. Method according to Claim 1, 2 or 3, **characterized in that**
hydrophobic silica (C) used is that having a carbon content of 0.1 to 5.0% by weight and a methanol wettability of greater than 30% by weight, i.e. water can wet this hydrophobic silica only when it comprises at least 30% by weight of methanol.

5. Method according to any of Claims 1 to 4,
**characterized in that**
the weight ratio of the hydrophilic silicas (B) used to the hydrophobic silicas (C) is 95:5 to 5:95, preferably 80:20 to 20:80, more preferably 70:30 to 30:70.

6. Method according to any of Claims 1 to 5, **characterized in that** organopolysiloxanes (D) used comprise those which consist substantially of R²₃SiO_{1/2} (M) units and SiO_{4/2} (Q) units, where R² has the definition indicated for it in claim 1, and where the molar ratio of M to Q units is preferably in the range from 0.5 to 2.0, more preferably in the range from 0.6 to 1.0.

7. Method according to any of Claims 1 to 6, **characterized in that** water-insoluble organic compounds (E) used comprise those selected from the group of mineral oils, natural oils, isoparaffins, polyisobutylenes, residues from the oxo synthesis of alcohols, esters of low molecular weight synthetic carboxylic acids, fatty acid esters, fatty alcohols, ethers of low molecular weight alcohols, phthalates, esters of phosphoric acid, and waxes.

8. Method according to any of Claims 1 to 7, **characterized in that**
(F) organopolysiloxanes used, which are different from (A), comprise linear or branched polyethersiloxanes.

9. Method for producing emulsions of defoamer compositions comprising hydrophobic silicas,
**characterized in that**
the defoamer compositions produced according to Claims 1 to 8 are mixed with
emulsifiers,
optionally thickeners,
and water.

10. Method for producing powders, **characterized in that** the defoamer compositions produced according to Claims 1 to 8 are mixed with
carrier materials.

11. Method for defoaming and/or for preventing the foaming of media, by mixing the defoamer compositions produced according to Claims 1 to 8 or the emulsions produced according to Claim 9 or the powders produced according to Claim 10 with the media.

12. Method according to Claim 11, **characterized in that** aqueous media produced during the production of pulp are used.

## Revendications

1. Procédé de fabrication de compositions antimousses contenant de la silice hydrophobe, **caractérisé en ce que**
(1) un mélange contenant :
(A) des organopolysiloxanes d'une viscosité de 10 à 10 000 000 mm²/s à 25 °C et 1 013 hPa, constitués d'unités de formule (I)
Rₐ(R¹O)_{b}SiO_{(4-a-b)/2} (I)
dans laquelle
les R peuvent être identiques ou différents, et signifient un radical hydrocarboné monovalent, éventuellement substitué, de 1 à 30 atomes de carbone, de préférence de 1 à 18 atomes de carbone, ou un atome d'hydrogène,
les R¹ peuvent être identiques ou différents, et signifient un atome d'hydrogène ou un radical hydrocarboné monovalent de 1 à 4 atomes de carbone,
a signifie 0, 1, 2 ou 3, et
b signifie 0, 1, 2 ou 3,
à condition que la somme a+b ≤ 3 et que la somme a+b soit de 2 pour plus de 50 % de toutes les unités de formule (I) dans l'organopolysiloxane (A), la viscosité des organopolysiloxanes (A) étant déterminée par le nombre des unités de formule (I),
(B) des silices hydrophiles d'une surface BET de 20 à 500 m²/g, les silices hydrophiles étant utilisées en quantités de 0,1 à 20 parties en poids, par rapport à 100 parties en poids d'organopolysiloxanes (A),
(C) une silice hydrophobe d'une surface BET de 50 à 500 m²/g, les silices hydrophobes étant utilisées en quantités de 0,1 à 20 parties en poids, par rapport à 100 parties en poids d'organopolysiloxanes (A), éventuellement
(D) des résines organopolysiloxanes constituées d'unités de formule
R²ₑ(R³O)_{f}SiO_{(4-e-f)/2} (II)
dans laquelle R² a la signification de R et R³ a la signification de R¹,
e signifie 0, 1, 2 ou 3, et
f signifie 0, 1, 2 ou 3,
à condition que la somme e+f ≤ 3 et que la somme e+f soit de 2 pour moins de 50 % de toutes les unités de formule (II) dans la résine organopolysiloxane,
et éventuellement
(E) des composés organiques insolubles dans l'eau,
est porté à des températures de 50 à 250 °C,
jusqu'à ce que la viscosité présente une valeur inférieure à 50 %, avantageusement inférieure à 40 %, de préférence inférieure à 30 %, de la viscosité mesurée que le mélange présentait avant le chauffage, la viscosité étant mesurée avec un viscosimètre cône-plaque à une température de 25 °C et un gradient de cisaillement de 1/s, et
(2) éventuellement, après l'hydrophobation des silices hydrophiles in situ réalisée en (1) en présence des silices hydrophobes,
(F) des organopolysiloxanes différents de (A) sont incorporés.

2. Procédé selon la revendication 1, **caractérisé en ce que** le mélange est chauffé en (1) en présence de catalyseurs (G) favorisant l'hydrophobation in situ, de préférence des hydroxydes de métaux alcalins.

3. Procédé selon la revendication 1 ou 2, **caractérisé en ce que** des organopolysiloxanes linéaires de formule
R_{3-g}(R¹O)_{g}Si-[OSiR₂]ₙ-OSi(OR¹)_{g}R_{3-g} (III)
sont utilisés en tant qu'organopolysiloxanes (A),
dans laquelle R et R¹ ont la signification indiquée dans la revendication 1,
g signifie 0 ou 1, et
n signifie un nombre entier et a une valeur telle que la viscosité des organopolysiloxanes (A) soit de 10 à 10 000 000 mm²/s à 25 °C et 1 013 hPa,
à condition que les organopolysiloxanes de formule (III) présentent en moyenne une teneur en groupes OH reliés à Si de 30 à 500 ppm en poids.

4. Procédé selon la revendication 1, 2 ou 3, caractérisé en en ce qu'une silice hydrophobe (C) ayant une teneur en carbone de 0,1 à 5,0 % en poids et une mouillabilité par le méthanol supérieure à 30 % en poids, c.-à-d. que l'eau ne peut mouiller cette silice hydrophobe que lorsqu'elle contient au moins 30 % en poids de méthanol, est utilisée.

5. Procédé selon l'une quelconque des revendications 1 à 4, **caractérisé en ce que** le rapport en poids entre les silices hydrophiles (B) utilisées et les silices hydrophobes (C) est de 95:5 à 5:95, de préférence de 80:20 à 20:80, de manière particulièrement préférée de 70:30 à 30:70.

6. Procédé selon l'une quelconque des revendications 1 à 5, **caractérisé en ce que** des organopolysiloxanes (D) qui sont essentiellement constitué d'unités R²₃SiO_{1/2} (M) et d'unités SiO_{4/2} (Q) sont utilisés, R² ayant la signification indiquée dans la revendication 1 et le rapport molaire entre les unités M et Q se situant de préférence dans la plage allant de 0,5 à 2,0, de préférence dans la plage allant de 0,6 à 1,0.

7. Procédé selon l'une quelconque des revendications 1 à 6, **caractérisé en ce que** des composés organiques insolubles dans l'eau (E) choisis dans le groupe constitué par les huiles minérales, les huiles naturelles, les isoparaffines, les polyisobutylènes, les résidus de la synthèse d'oxoalcools, les esters d'acides carboxyliques synthétiques de faible poids moléculaire, les esters d'acides gras, les alcools gras, les éthers d'alcools de faible poids moléculaire, les phtalates, les esters de l'acide phosphorique et les cires sont utilisés.

8. Procédé selon l'une quelconque des revendications 1 à 7, **caractérisé en ce que** des polyéthersiloxanes linéaires ou ramifiés sont utilisés en tant qu'organopolysiloxanes (F) qui sont différents de (A).

9. Procédé de fabrication d'émulsions de compositions antimousses contenant des silices hydrophobes, **caractérisé en ce que** les compositions antimousses fabriquées selon les revendications 1 à 8 sont mélangées avec des émulsifiants,
éventuellement des épaississants,
et de l'eau.

10. Procédé de fabrication de poudres, **caractérisé en ce que** les compositions antimousses fabriquées selon les revendications 1 à 8 sont mélangées avec des matériaux supports.

11. Procédé de démoussage et/ou d'inhibition du moussage de milieux, par mélange des compositions antimousses fabriquées selon les revendications 1 à 8 ou des émulsions fabriquées selon la revendication 9 ou des poudres fabriquées selon la revendication 10 avec les milieux.

12. Procédé selon la revendication 11, **caractérisé en ce que** des milieux aqueux formés lors de la fabrication de cellulose sont utilisés.
